Europäisches Patentamt

European Patent Office

Office européen des brevets

(11) Publication number: **0 220 138**
A1

# EUROPEAN PATENT APPLICATION

(21) Application number: 86830259.7

(22) Date of filing: 22.09.86

(51) Int. Cl.⁴: **B 23 D 21/00**

(30) Priority: 25.09.85 IT 62685

(43) Date of publication of application:
29.04.87 Bulletin 87/18

(84) Designated Contracting States:
AT BE CH DE FR GB LI LU NL SE

(71) Applicant: Amadio, Filippo
Via Erasmo Mari, 57/n
I-63100 Ascoli Piceno (IT)

(72) Inventor: Amadio, Filippo
Via Erasmo Mari, 57/n
I-63100 Ascoli Piceno (IT)

(74) Representative: Baldi, Claudio
Piazza Ghislieri, 3
I-60035 Jesi (Ancona) (IT)

(54) Pipe cutting machine with two blades on the same plane and perpendicular to one another.

(57) A pipe cutting machine, using two blades (6, 7) which operate in perpendicular directions and are activated in sequence to cut the pipe (8).

The first blade (6) to come into operation acts at a tangent to the pipe (8), its function being to create a small transversal slot on the side surface of the pipe which acts as a guide for the second blade (7).

FIG. 1

EP 0 220 138 A1

- 1 -

## DESCRIPTION TEXT

The subject of this patent application for an industrial invention is a pipe cutting machine using two blades, operating in perpendicular directions, which are activated in sequence, one after the other and which are able to cut the pipe in two working strokes.

The invention was designed to improve the method of metallic pipe cutting operations. These operations, using traditional methods, do not fail to present considerable problems.

Currently, a metallic pipe can be cut by means of a disk saw or a belt saw, for cuts either perpendicular or at an angle to its axis. The cut obtained by the teeth of the saw, which cut into the pipe walls, can be considered fairly precise, especially taking into account the high technology of the blades used and the mechanisms which activate them; but as far as other aspects are concerned, this operation is not totally without problems of various kinds.

In fact, by observing the consequences of a cut effected on a pipe by a saw of any kind whatsoever, it can very often be noted that the cut edges are poorly finished, due to the presence of flash and that the cutting plane itself is not perfectly precise, especially near the ribbing when the cut is not perpendicular to the axis and the blade is subject to lateral pressure. Moreover, there is an abundance of sawdust in the form of grains which remain on the surface of the piece and interfere with subsequent machining phases if they are not removed.

It should also be stressed that an operation of this type

- 2 -

results in a great deal of noise, due to the vibration of the blade as well as the pipe being cut, which creates a disturbance in the whole of the work environment.

However, in cutting operations as they are currently carried out, apart from what is mentioned above, the major problem, which can affect the rate of production and consequently manufacturing costs directly, is the length of time the operation takes, which becomes more of a penalty the bigger the diameter and the greater the thickness of the pipe, or the length to be cut, and depending on the inclination of the cutting plane.

In order to overcome these many problems, technicians in the field have already been designing and manufacturing pipe cutting machines for some time now, which are fairly silent and efficient and use one blade which is able to cut the pipe, clamped in a suitable vice, in a single stroke.

The cut effected by means of these machines, however, can hardly be considered satisfactory if the cut section has to make up the end section of a pipe, on which no further finishing, cleaning or intermediate machining is to be carried out.

In fact, one of the edges cut by a blade on the abovementioned machines is torn and jagged in such a way that it actually makes that particular piece of the pipe unfit for use. The other edge, while not revealing excessive deformation, is not, however, sufficiently well finished to be able to make up a completed end section of a pipe.

Therefore, on the one hand these machines are hardly

- 3 -

suitable for intermediate cuts in those cases where each piece of a pipe must be able to be used and, on the other hand, they can only be considered suitable for end cuts where the cut section is not required to be extremely precise and well finished, since it will undergo subsequent machining phases, such as grinding or welding for example.

The pipe cutting machine, according to the invention, having been designed following a careful study of the problems just described, is characterised by the fact that it is equipped with two blades perpendicular to one another, driven forward by two oleodynamic pistons . The blades effect the cutting of a pipe, suitably positioned and clamped between special jaws in front of said blades.

The combined use of the two blades guarantees an extremely precise cut, with no trace of flash on either edges, so as to ensure finished cut pieces, suitable for making up the end section of pipes, without having to undergo any further finishing processes. Moreover, cutting times, compared to the traditional disk or belt saws, are drastically reduced due to the high speed of the blades and also because this machine can be programmed to sustain a high rate of production.

As already mentioned, the two blades operate in rapid sequence, in two directions, one perpendicular to the other; the first blade to come into operation acts at a tangent to the pipe, its function being to create a small transversal slot on the side surface of the pipe which acts as a guide to the subsequent actual cut. This is effected by the second

- 4 -

blade which inserts itself precisely into the abovementioned slot by moving forward. Starting from this slot, it gradually effects a transversal cut which causes the formation of a semi-circular swarf which is pushed towards the outside of the pipe by the blade, where it tends to curl up.

Therefore, this swarf does not interfere in any way with the gradual cutting process of the blade, nor is it crushed and ground by the blade into the interior of the pipe, on which a precise, clean and smooth cut is obtained.

For greater clarity of explanation, the description of the instant invention will continue with reference to the enclosed diagrams which are for illustrative and not restrictive purposes, in which the machine, in accordance with the invention, is schematically represented.

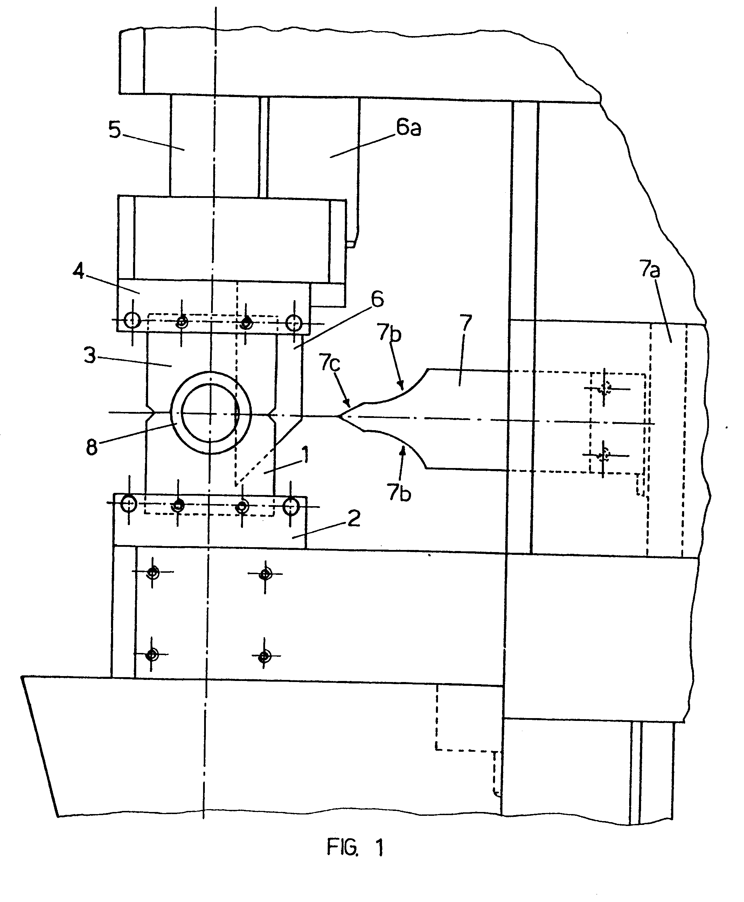

Fig. 1 is a lateral view of the pipe cutting machine in question from an angle parallel to the longitudinal axis of the pipe to be cut.

With reference to the aforementioned figure, the pipe cutting machine, in accordance with the invention, is equipped with 3 basic elements: a vice, first blade set and second blade set.

The vice, which has the function of clamping the pipe, is composed of a lower fixed jaw (1), fixed onto the lower support (2) of the machine frame, and a mobile jaw (3), fixed by means of its respective jaw mounting (4) onto the rod of the oleodynamic piston (5) that serves to activate the open/ close mechanism of said jaw.

The jaws (1 and 3) are easily interchangeable and their internal profile will be of the same shape and dimensions as the pipe to be cut, while the jaw mountings (2 and 4) will have a universal coupling to take all the various kinds of jaws that may be applied to the machine.

A particular aspect of these jaws lies in the fact that they must have, on a transversal plane, perpendicular to the longitudinal axis of the pipe, a slot of such dimensions as to allow the insertion of both the first and second blades whose stroke is guided by the two facing walls of said transversal slot.

The first blade set is composed of a blade (6) and a cylinder (6a) and is immediately activated after the pipe is clamped into the vice.

The function of this first blade (6) is to cut right through the pipe at a tangent, in such a way as to make a transversal slot to guide the subsequent penetration of the main blade (7) which moves at an angle perpendicular to blade (6).

Blade (7), activated by its respective oleodynamic piston (7a) cuts the pipe completely, immediately after blade (6) has completed its return stroke, or in other words, as soon as the latter has created the aforementioned guide slot.

Notice should be taken of the profile of blade (7), which has two curvilinear cutting edges (7b), which are concave and symmetrical and are connected by a central tip (7c). At the points of connection with said cutting edges, the width of the tip is equal to the height of the guide slot effected by blade (6) on the surface of the pipe (8).

More specifically, the tangent of the cutting edges (7b)

0220138

- 6 -

at the points at which they meet the tip (7c), is parallel to the direction in which the blade (7) advances, in such a way that it starts cutting at the edges of the guide slot, in a gentle and gradual fashion, so as to avoid distorting the material due to the tearing off of the swarf.

For ease of description, the example of a pipe cut along the transverse/perpendicular plane has been used, but there is no reason why a differently angled nest cannot be created between the jaws, so that the pipe may be placed according to the angles required in relation to the operational plane of the two blades, which move, as previously mentioned, on a single operational plane, but perpendicular to one another and in a precise sequence.

The working phases of the machine, in accordance with the invention are therefore: the clamping of the pipe (8) by the vice, the activation of blade (6) by its respective piston (6a), the rapid return of blade (6) towards its position of arrest, the activation of blade (7) by its piston (7a), the resulting extremely rapid cutting of the pipe, the removal of a slice of pipe the same width as the blade, followed by the return of blade (7) towards its position of arrest and the opening of the vice.

The extreme precision of the cut is due to the scraping of the blade on the guiding jaws (1 and 3) and the gripping of the pipe in a bilateral position, which, together with the great speed of the sequence described, prevents any vibration on the part of the pipe or the blades.

The cleaness and finish of the cut are also due to the formation of swarf, not on the inside, but on the outside of the pipe; the blade (7) separates the two curled half-rings and at the same time pushes them towards the outside of the pipe; as the second blade (7) penetrates the pipe, they come away progressively, starting from the external edges of the aforementioned guide slot, until the pipe is completely cut and the blade emerges at a point diametrically opposite the slot of entry.

Dr. Ing. CLAUDIO BALDI
MANDATARIO ABILITATO

0220138

- 1 -

CLAIMS

1) pipe cutting machine using two blades on the same plane and perpendicular to one another, characterised by the fact that it is composed of:

- a vice, made up of a hydraulic piston (5) upon the rod of which there is a mobile jaw (3) working in conjunction with a fixed jaw (1) which is positioned opposite, its purpose being to transversally clamp the pipe to be cut; said jaws are provided with a transversal slot in the centre, of such dimensions as to allow the guided penetration of the blades (6) and (7) which are on the same plane as said transversal slot.

- a first blade set, made up of a blade (6) which, pushed by a hydraulic cylinder(6a), cuts into the pipe at a tangent, so as to form a transversal guide slot for the second blade (7) which completes the cutting operation.

- a second blade set made up of a blade (7) on the same plane as blade (6) but moving in a direction perpendicular to the first blade, so that it inserts itself exactly into said guide slot.

2) Pipe cutting machine with two blades on the same plane and perpendicular to one another, in accordance with claim 1) characterised by the fact that blade (7) has two symmetrical, concave, curvilinear cutting edges (7b) connected by a central tip (7c). The tangent of the cutting edges (7b),on meeting the the tip (7c), is is parallel to the direction of travel of the blade (7); the width of said tip (7c), measured at the point of contact with the cutting edges (7b) is

- 2 -

equal to the  height of the guide slot previously made by
blade (6) on the surface of the pipe (8).

Dr. Ing. CLAUDIO BALDI
MANDATARIO ABILITATO

FIG. 1

CLAUDIO BALDI
TARIO ABILITATO

TAV. I

European Patent Office

**EUROPEAN SEARCH REPORT**

**0220138**
Application number

EP 86 83 0259

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-2 250 931 (GRIEDER) * Whole document * | 1 | B 23 D 21/00 |
| X | * Whole document * | 2 | |
| Y | FR-A-1 263 376 (GATEAU) * Whole document * | 1 | |
| A | GB-A- 610 580 (VERNEY) | | |
| A | US-A-2 741 309 (CZARNIK) | | |

-----

|  |  | TECHNICAL FIELDS SEARCHED (Int. Cl.4) |
|---|---|---|
|  |  | B 23 D |

The present search report has been drawn up for all claims

| Place of search | Date of completion of the search | Examiner |
|---|---|---|
| THE HAGUE | 12-02-1987 | BERGHMANS H.F. |